# EUROPEAN PATENT APPLICATION

(11) **EP 4 807 679 A1**
(43) Date of publication of application: **16.09.2026**
(21) Application number: 24887818.3
(22) Date of filing: 29.10.2024
(51) Int. Cl.: G06T 11/00

(54) **IMAGE GENERATION METHOD AND APPARATUS, ELECTRONIC DEVICE AND STORAGE MEDIUM**

(30) Priority: 08.11.2023 CN 202311484869
(71) Applicant: Beijing Zitiao Network Technology Co., Ltd., Beijing 100190 (CN); Lemon Inc., Grand Cayman, KY1-1205 (KY)
(72) Inventor: ZHANG, Peng, Beijing 100028 (CN); MA, Zhibei, Los Angeles California 90066 (US); WANG, Weichen, Beijing 100028 (CN); NI, Xiaoran, Los Angeles California 90066 (US); LI, Zhe, Beijing 100028 (CN); HAN, Minsheng, Beijing 100028 (CN)
(74) Representative: Isarpatent
(86) International application number: PCT/CN2024/128246
(87) International publication number: WO 2025/098206

(57) **Abstract**

Embodiments of the present disclosure disclose an image generation method and apparatus, an electronic device, and a storage medium. The method comprises: acquiring a text description; determining a style classification label of the text description; determining, from various text-to-image models, a target model corresponding to the style classification label, where the various text-to-image models have different image generation styles; and generating, through the target model, a target image corresponding to the text description.

## Description

### CROSS-REFERENCE TO RELATED APPLICATION(S)

The present application claims priority to Chinese Patent Application No. 202311484869.3, filed on November 8, 2023 and entitled "IMAGE GENERATION METHOD AND APPARATUS, ELECTRONIC DEVICE AND STORAGE MEDIUM", which is incorporated herein by reference in its entirety.

### FIELD

Embodiments of the present disclosure relate to the field of computer technologies, and in particular, to an image generation method and apparatus, an electronic device, and a storage medium.

### BACKGROUND

At present, there are extensive demands for image design. At present, an image generation method includes obtaining a text-to-image model based on deep learning, and performing image generation based on text through the text-to-image model. The images generated in this way tend to be relatively single in style and cannot meet diverse demands.

### SUMMARY

Embodiments of the present disclosure provide an image generation method and apparatus, an electronic device, and a storage medium, which are able to implement image generation in various styles.

In a first aspect, an embodiment of the present disclosure provides an image generation method, comprising:
acquiring a text description;
determining a style classification label of the text description;
determining, from various text-to-image models, a target model corresponding to the style classification label, where the various text-to-image models have different image generation styles; and
generating, through the target model, a target image corresponding to the text description.

In a second aspect, an embodiment of the present disclosure further provides an image generation apparatus, comprising:
a text acquiring module, configured to acquire a text description;
a label determining module, configured to determine a style classification label of the text description;
a model selecting module, configured to determine, from various text-to-image models, a target model corresponding to the style classification label, where the various text-to-image models have different image generation styles; and
an image generation module, configured to generate, through the target model, a target image corresponding to the text description.

In a third aspect, an embodiment of the present disclosure further provides an electronic device, comprising:
one or more processors; and
a storage apparatus, configured to store one or more programs,
where the one or more programs, when executed by the one or more processors, cause the one or more processors to implement the image generation method according to any one of embodiments of the present disclosure.

In a fourth aspect, an embodiment of the present disclosure further provides a storage medium including computer-executable instructions, where the computer-executable instructions, when executed by a computer processor, are configured to perform the image generation method according to any one of embodiments of the present disclosure.

### BRIEF DESCRIPTION OF THE DRAWINGS

In combination with the drawings and with reference to the following specific embodiments, the above and other features, advantages and aspects of various embodiments of the present disclosure will become more apparent. Throughout the drawings, the same or similar reference numbers refer to the same or similar elements. It should be understood that the drawings are schematic and that components and elements are not necessarily drawn to scale.
Fig. 1 is a schematic flowchart of an image generation method according to an embodiment of the present disclosure;
Fig. 2 is a schematic flowchart of an image generation method according to an embodiment of the present disclosure;
Fig. 3 is a flowchart block diagram of text generation model construction in an image generation method according to an embodiment of the present disclosure;
Fig. 4 is a flowchart block diagram of an image generation method according to an embodiment of the present disclosure;
Fig. 5 is a schematic structural diagram of an image generation apparatus according to an embodiment of the present disclosure; and
Fig. 6 is a schematic structural diagram of an electronic device according to an embodiment of the present disclosure

### DETAILED DESCRIPTION OF EMBODIMENTS

Embodiments of the present disclosure will be described in more detail below with reference to the drawings. Although certain embodiments of the present disclosure are shown in the drawings, it should be understood that the present disclosure may be implemented in various forms and should not be construed as being limited to the embodiments set forth herein. On the contrary, these embodiments are provided for a more thorough and complete understanding of the present disclosure. It should be understood that the drawings and embodiments of the present disclosure are only for exemplary purposes and are not intended to limit the protection scope of the present disclosure.

It should be understood that various steps described in method implementations of the present disclosure may be executed in different order and/or in parallel. In addition, the method implementations may include additional steps and/or omit execution of the steps shown. The scope of the present disclosure will not be limited in this regard.

The term "include/comprise" and variations thereof used herein are open-ended inclusions, that is, "include/comprise but not limited to". The term "based on" is "at least partially based on". The term "an embodiment" represents "at least one embodiment"; the term "another embodiment" represents "at least one additional embodiment"; the term "some embodiments" represents "at least some embodiments". Relevant definitions of other terms will be given in the description below.

It should be noted that the concepts such as "first" and "second" mentioned in the present disclosure are only used to distinguish different apparatuses, modules or units, and are not used to limit the order of functions performed by these apparatuses, modules or units or interdependence therebetween.

It should be noted that the modifiers of "one" and "multiple" mentioned in the present disclosure are illustrative and not restrictive, and those skilled in the art should understand that unless otherwise clearly indicated in the context, they should be understood as "one or more".

The names of messages or information exchanged between multiple apparatuses in the implementations of the present disclosure are only for illustrative purposes, and are not intended to limit the scope of these messages or information.

It may be understood that before using the technical solutions disclosed in various embodiments of the present disclosure, the user should be informed of the type, scope of use, use scenarios, etc. of personal information involved in the present disclosure and the authorization of the user should be obtained in an appropriate manner in accordance with relevant laws and regulations.

It may be understood that the data involved in the technical solution (including but not limited to the data itself, acquisition or use of the data) should comply with the requirements of corresponding laws, regulations and related provisions.

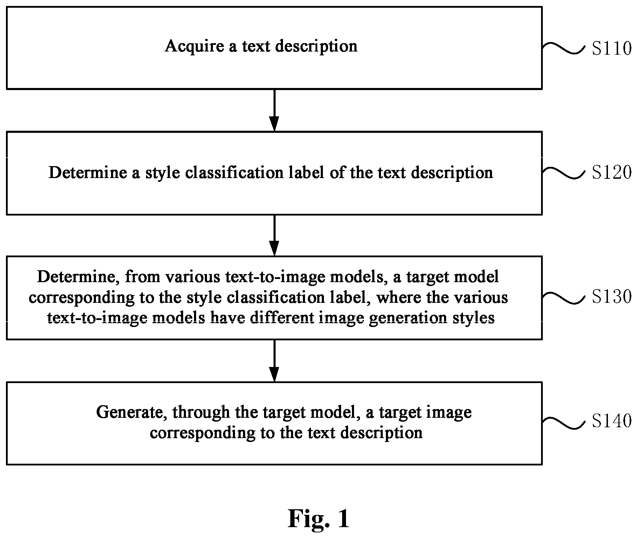

Fig. 1 is a schematic flowchart of an image generation method according to an embodiment of the present disclosure. The embodiment of the present disclosure is applicable to a situation of generating an image, for example, a situation of generating an advertisement image. The method may be performed by an image generation apparatus. The apparatus may be implemented in the form of software and/or hardware, and the apparatus may be configured in an electronic device, such as a computer.

As shown in Fig. 1, the image generation method provided by the embodiment may include the following steps.

S110: A text description is acquired.

In the embodiment of the present disclosure, the text description may include characters such as words and symbols, and may be used to describe image content of a to-be-generated target image. Among them, the text description may be acquired based on at least one of the following manners.

The image generation apparatus may provide a user interface, and a text input control may be set in the user interface, and the text description input by the user may be received through the text input control; a text recognition control may also be set in the user interface, and the text description in an input image may be recognized through the text recognition control; a text reading control may also be set in the user interface, and a corresponding text description under a target address may be read through the text reading control, etc. In addition, other manners of acquiring the text description may also be applied here, which will not be listed one by one.

S120: A style classification label of the text description is determined.

In the embodiment of the present disclosure, at least two style classification labels may be preset, where the style classification labels may include, for example, but are not limited to, a realistic style, a 3D computer image style, a cartoon style, a Lego style, an oil painting style, a Chinese fine brushwork style, etc.

Among them, the text description may be divided into style classification labels based on an existing text classification algorithm. The existing text classification algorithm may include, but is not limited to, a classification algorithm based on a classification tree (such as a decision tree, a random forest, etc.), a deep neural network method (such as a convolutional neural network, a recurrent neural network), etc. In addition, other text classification manners may also be applied here, which will not be listed one by one.

S130: From various text-to-image models, a target model corresponding to the style classification label is determined, where the various text-to-image models have different image generation styles.

In the embodiment of the present disclosure, at least two existing models for generating images based on text may be used as text-to-image models. Among them, different text-to-image models have different image generation styles, that is, the generated images have different styles. Among them, a correspondence between each style classification label and the at least two text-to-image models may be preset, and the correspondence may include a one-to-one correspondence in which one style classification label uniquely corresponds to one text-to-image model, and/or a many-to-one correspondence in which a plurality of style classification labels correspond to one text-to-image model, etc.

In some optional implementations, the image generation method may further comprise: in a case where the determination of the style classification label fails, taking a preset general model among the various text-to-image models as the target model.

In the process of classifying the text description into style classification labels, a probability value of the text description belonging to each of the style classification labels may be first determined, and a style classification label with a largest probability value and a probability value greater than a preset value may be determined as the style classification label of the current text description. However, there is a case where the probability values of the text description belonging to each of the style classification labels are close to each other or the largest probability value is less than the preset value. In the above case, it may be considered that the text description has no obvious style classification label corresponding to it, that is, the determination of the style classification label fails. In the case where the determination of the style classification label of the text description fails, a preset general model among the various text-to-image models may be used as the target model for image generation, so as to ensure that the image may be normally generated.

In these optional implementations, by presetting a general model, in the case where the text description has no obvious style classification label to correspond to, the general model may be used for the bottom-up image generation, which may ensure the normal generation of the image.

S140: Through the target model, a target image corresponding to the text description is generated.

After the target model is determined, the text description may be used as an input to the target model, so as to generate the target image corresponding to the text description through the target model.

According to the technical solutions of the embodiments of the present disclosure, a text description is acquired; a style classification label of the text description is determined; a target model corresponding to the style classification label is determined from various text-to-image models, where the various text-to-image models have different image generation styles; and a target image corresponding to the text description is generated through the target model. By classifying the text description into styles, and selecting a target model corresponding to the classification from at least two text-to-image models to generate an image, images may be generated in various styles, and user experience may be improved.

The embodiments of the present disclosure may be combined with various alternatives in the image generation method provided in the above embodiments. The image generation method provided by the embodiment details the process of acquiring the description text. By generating the text description in combination with a text generation theme and an object feature of an image receiving object, the target image generated based on the text description may fit the theme, and the satisfaction degree of the image receiving object may be improved to some extent, further meeting user requirements.

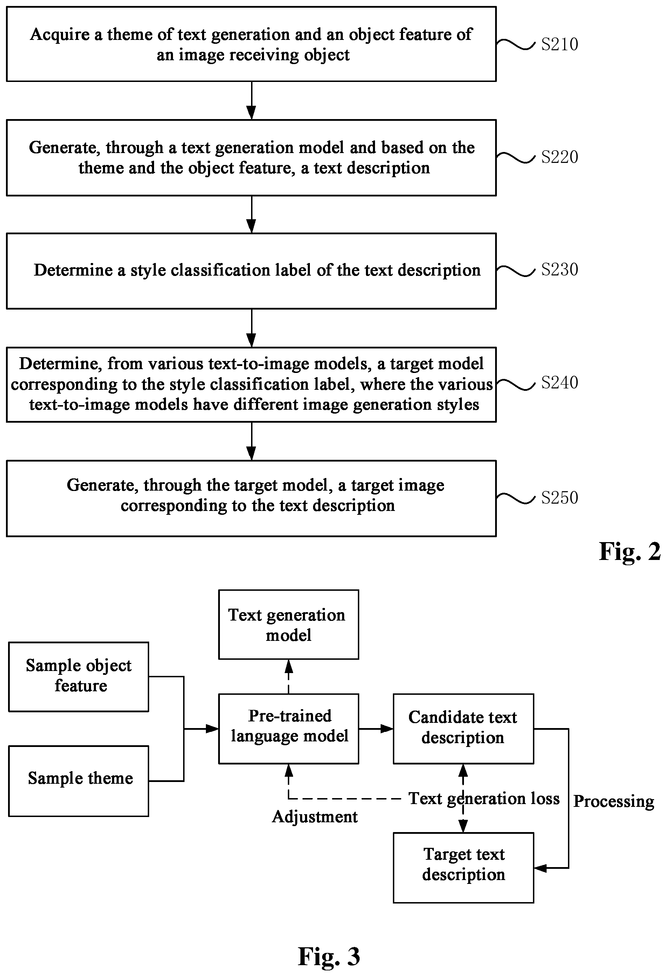

Fig. 2 is a schematic flowchart of an image generation method according to an embodiment of the present disclosure. As shown in Fig. 2, the image generation method provided by the embodiment may include the following steps.

S210: A text generation theme and an object feature of an image receiving object are acquired.

In the embodiment, the text generation theme may also be considered as a theme for subsequent image generation. The theme may be acquired by: receiving a theme input by a user through a user interface provided by the image generation apparatus.

Among them, the image receiving object may be considered as an image audience of the to-be-generated target image. Among them, the object feature of the image receiving object may be considered as a group feature used to describe the image audience. Among them, the object feature of the image receiving object may be acquired in at least one of the following manners.

An example of feature text description is displayed through the user interface provided by the image generation apparatus, feature text description input by the user following the example is received, keywords are extracted based on the received feature text description and are used as the object feature; multidimensional feature labels are provided through the user interface, feature labels in each dimension selected by the user are received, and the received feature labels are used as the object feature; or a plurality of groups of object feature sets are provided through the user interface, where each group of object feature sets may include at least one object feature, a target object feature set selected by the user is received, and object features therein are used as the object feature of the image receiving object.

In addition, other manners of acquiring the theme and the object feature may also be applied here, which will not be listed one by one.

S220: Through a text generation model, the text description is generated based on the theme and the object feature.

In the embodiment, the text generation model may be an existing model for generating text based on text. The theme and the object feature may be input to the text generation model, and the text description may be generated by the text generation model. Thus, text descriptions for different themes and different object features may be obtained.

S230: A style classification label of the text description is determined.

S240: From various text-to-image models, a target model corresponding to the style classification label is determined, where the various text-to-image models have different image generation styles.

S250: Through the target model, a target image corresponding to the text description is generated.

Exemplarily, Fig. 3 is a flowchart block diagram of text generation model construction in an image generation method according to an embodiment of the present disclosure. Referring to Fig. 3, in some optional implementations, the process of constructing the text generation model may include the following steps.

First, a sample object feature and a sample theme are acquired. Among them, the sample object feature and the sample theme may include, but are not limited to, object features and themes customized by each user, and randomly defined pseudo-object features and pseudo-themes, etc.

Then, a candidate text description is generated through a pre-trained language model based on the sample object feature and the sample theme. Among them, the sample object feature and the sample theme may be input to the text generation model, and the candidate text description may be generated by the text generation model. Among them, the sample object feature, the sample theme and the text description may be used as a data pair. Based on this method, a large number of data pairs may be generated as candidate data for constructing the model.

Secondly, the candidate text description is processed based on a preset rule to obtain a target text description. The preset rule may include a preset rule for text addition, deletion, change, and other processing. Among them, processing the candidate text description based on the preset rule may include at least one of the following: filtering the candidate text description based on a preset filtering rule; and adjusting the candidate text description based on a preset adjustment rule.

Among them, filtering the candidate text description based on the preset filtering rule may comprise: presetting keywords to be filtered out, and filtering out candidate text descriptions containing the keywords to be filtered out. Among them, the preset adjustment rule may include, but is not limited to, at least one of a word order adjustment rule, a text addition rule, a text replacement rule, etc., and the candidate text description may be adjusted accordingly based on the preset adjustment rule.

By processing the description of the candidate text based on the preset rule, the target text description that meets the requirements may be obtained, and then the text generation model may be constructed based on the target description text that meets the requirements.

Then, a text generation loss is determined based on the target text description and the candidate text description. Among them, the text generation loss may be obtained based on an existing text sequence loss function, such as a connectionist temporal classification (CTC) loss function, etc.

Finally, the pre-trained language model is adjusted based on the text generation loss to obtain the text generation model. Among them, the parameters of the pre-trained language model may be finely tuned in reverse using the text generation loss to construct the text generation model.

In these optional implementations, by generating and processing the candidate text description for constructing the model, the target text description for constructing the text generation model may be obtained. Then, the text generation model may be adjusted based on the target text description to obtain a text generation model with better performance.

According to the technical solutions of the embodiments of the present disclosure, the process of acquiring the description text is described in detail. By generating the text description in combination with the text generation theme and the object feature of the image receiving object, the target image generated based on the text description may fit the theme, and the satisfaction degree of the image receiving object may be improved to some extent, further meeting user requirements. The image generation method provided by the embodiment of the present disclosure belongs to the same inventive concept as the image generation method provided by the above embodiment. For technical details not described in detail in the embodiment, reference may be made to the above embodiment, and the same technical features have the same beneficial effects in the embodiment and the above embodiment.

The embodiments of the present disclosure may be combined with various alternatives in the image generation method provided in the above embodiments. The image generation method provided by the embodiment details the step of determining the style classification label. A text classifier may be constructed based on texts generated by the constructed text generation model and labels of the texts, and then the text description may be classified by the constructed text classifier, which may achieve a good text classification effect.

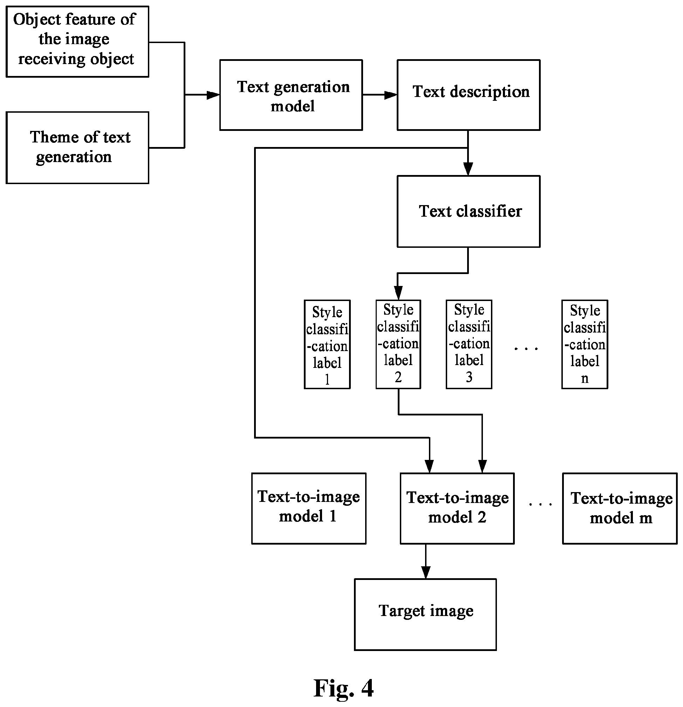

Fig. 4 is a flowchart block diagram of an image generation method according to an embodiment of the present disclosure. As shown in Fig. 4, the image generation method provided by the embodiment may include the following steps.

First, a text generation theme and an object feature of an image receiving object are acquired.

Then, a text description is generated through a text generation model based on the theme and the object feature.

Secondly, a style classification label of the text description is determined through a text classifier. For example, in Fig. 4, style classification label 2 is determined as the style classification label of the text description.

Among them, the text classifier is constructed based on a sample text output by the text generation model and a sample label of the sample text. Among them, after the text generation model is constructed, the text description generated by the text generation model may be used as the sample text of the text classifier, a style category label (for example, a manual label) of each sample text may be determined and used as the sample label. The text classifier may be constructed in a supervised manner using the sample text and the sample label to obtain the constructed text classifier.

The text description generated by a text generator is classified by the constructed text classifier to obtain the style classification label, which may achieve a good classification effect and is beneficial to selecting the target model that best fits the style of the text description.

Then, a target model corresponding to the style classification label is determined from various text-to-image models, where the various text-to-image models have different image generation styles. For example, in Fig. 4, text-to-image model 2 is determined, from text-to-image model 1 to text-to-image model m, as the target model corresponding to style classification label 2.

Finally, a target image corresponding to the text description is generated through the target model.

In some optional implementations, the target image may include an advertisement image, where the text description may be generated based on an advertisement theme and an object feature of an advertisement receiving object. For example, referring to Fig. 4, the acquired text generation theme may include the advertisement theme, and the object feature of the image receiving object may include the object feature of the advertisement receiving object. Among them, the object feature of the advertisement receiving object may be considered as a group feature of an advertisement audience. Among them, the object feature of the advertisement receiving object may be an object feature customized by an advertisement deliverer, or may be an object feature acquired after being authorized by the advertisement audience.

It may be understood that before using the technical solutions disclosed in various embodiments of the present disclosure, the user should be informed of the type of personal information acquisition involved in the present disclosure (such as the object feature of the advertisement receiving object), the scope of use, the use scenarios, etc. and the authorization of the user should be obtained in an appropriate manner in accordance with relevant laws and regulations.

For example, in response to receiving an active request from a user, prompt information is sent to the user to clearly inform the user that the requested operation will require access to and use of personal information of the user. As such, the user may independently choose, based on the prompt information, whether to provide the personal information to software or hardware, such as an electronic device, an application, a server, or a storage medium, that performs the operations of the technical solutions of the present disclosure.

Exemplarily, an input control or a selection control of the object feature may be provided on a display interface of a target object corresponding to the advertisement theme. Among them, the target object may include a physical object (such as an item) or a virtual object (such as a service). The user may actively input the object feature of the advertisement receiving object in the input control, or may select the object feature from preset feature labels through the selection control, etc.

As an optional but non-limiting implementation, in response to receiving the active request from the user, the prompt information may be sent to the user in the form of, for example, a pop-up window, in which the prompt information may be presented in text. In addition, the pop-up window may also carry a selection control for the user to select "agree" or "disagree" to provide the personal information to the electronic device.

It may be understood that the above process of notifying and acquiring user authorization is only illustrative and does not limit the implementations of the present disclosure, and other manners that satisfy the relevant laws and regulations may also be applied to the implementations of the present disclosure.

Among them, after the advertisement image is generated, it may also be displayed on the display interface of the target object corresponding to the advertisement theme. In some implementations, at least one advertisement image may be included. In this case, an advertisement video may be generated based on the at least one advertisement image, and the advertisement video may be played on the display interface. Exemplarily, advertisement image frames in a sequence form may be generated, that is, there is a reasonable optical flow between the advertisement image and images before and after the advertisement image in the sequence, and then the advertisement video may be generated based on a plurality of advertisement image frames to improve the delivery effect of the advertisement video.

In these optional implementations, a customized text description may be generated for the advertisement audience and the advertisement theme, and the target image may be generated based on the target generation model that best fits the style of the text description, which may make the target image easily accepted by the advertisement audience, improving the promotion effect of the advertisement. After the advertisement image is generated,

In some further implementations, in the case where the target image includes the advertisement image, the image generation method may further comprise:

acquiring multimedia data of the target object corresponding to the advertisement theme. Among them, the target object corresponding to the advertisement theme may include a physical object (such as an item) or a virtual object (such as a service). Among them, the multimedia data of the target object may include at least one of the following data: text data for introducing the target object, and image data, video data, etc. associated with the target object.

Accordingly, generating, through the target model, the target image corresponding to the text description may include: inputting the multimedia data and the text description into the target model to generate the target image through the target model.

Among them, in addition to the model capability of generating an image based on text, the target model may further have a processing capability for the multimedia data. For example, when the multimedia data includes the text data for introducing the target object, the text data may be merged with the target text description, and the merged text may be used as a control condition for the target model, so that the generated target image may simultaneously present the content of the text data for introducing the target object and the content of the target text description. For another example, when the multimedia data includes the image data associated with the target object, the image data and the target text description may be used as the control condition for the target model, so that the generated target image may simultaneously present the content of the image data and the content of the target text description. Moreover, when the multimedia data includes at least two items of data, the at least two items of data and the target text description may be used as the control condition for the target model to generate the target image that presents the content of the at least two items of data and the content of the target text description.

In these further implementations, the target text description may be combined with the multimedia data of the target object corresponding to the advertisement theme to generate the target image, which may make the target image fit the advertisement theme better to meet the requirements of the advertisement deliverer.

According to the technical solutions of the embodiments of the present disclosure, the step of determining the style classification label is described in detail. A text classifier may be constructed based on texts generated by the constructed text generation model and labels of the texts, and then the text description may be classified by the constructed text classifier, which may achieve a good text classification effect. The image generation method provided by the embodiment of the present disclosure belongs to the same inventive concept as the image generation method provided by the above embodiment. For technical details not described in detail in the embodiment, reference may be made to the above embodiment, and the same technical features have the same beneficial effects in the embodiment and the above embodiment.

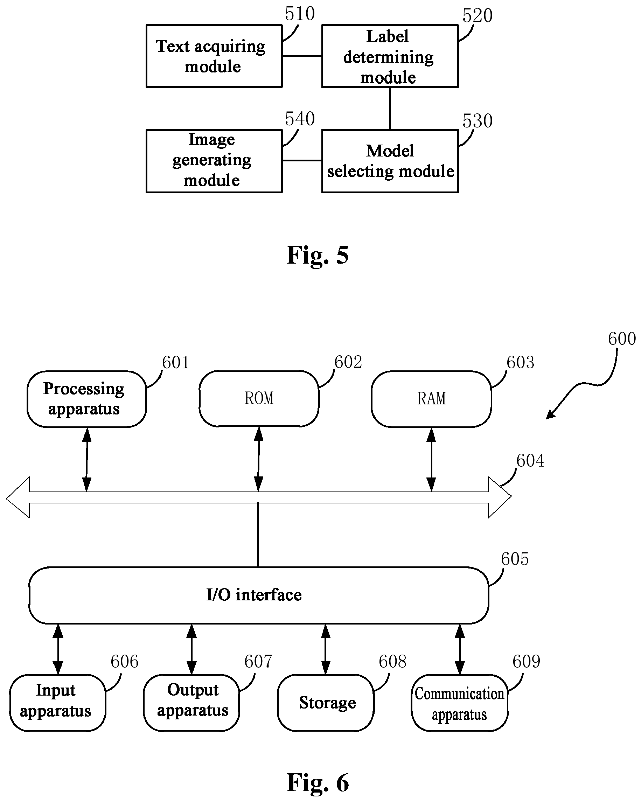

Fig. 5 is a schematic diagram of a structure of an image generation apparatus according to an embodiment of the present disclosure. The image generation apparatus provided by the embodiment is applicable to a situation of generating an image, for example, a situation of generating an advertisement image.

As shown in Fig. 5, the image generation apparatus provided by the embodiment of the present disclosure may include a text acquiring module 510, a label determining module 520, a model selecting module 530, and an image generating module 540.

The text acquiring module 510 is configured to acquire a text description.

The label determination module 520 is configured to determine a style classification label of the text description.

The model selection module 530 is configured to determine, from various text-to-image models, a target model corresponding to the style classification label, where the various text-to-image models have different image generation styles.

The image generation module 540 is configured to generate, through the target model, a target image corresponding to the text description.

In some optional implementations, the text acquiring module may be configured to:
acquire a theme of text generation and an object feature of an image receiving object; and
generate, through a text generation model, the text description based on the theme and the object feature.

In some optional implementations, the image generation apparatus may further include a model construction module.

The model construction module is configured to construct the text generation model based on the following process:
acquiring a sample object feature and a sample theme;
generating, through a pre-trained language model, a candidate text description based on the sample object feature and the sample theme;
processing the candidate text description based on a preset rule to obtain a target text description;
determining a text generation loss based on the target text description and the candidate text description; and
adjusting the pre-trained language model based on the text generation loss to obtain the text generation model.

In some optional implementations, the model construction module may be further configured to process the candidate text description based on at least one of the following preset rules:
filtering the candidate text description based on a preset filtering rule; and
adjusting the candidate text description based on a preset adjustment rule.

In some optional implementations, the label determination module may be configured to:
determine, through a text classifier, the style classification label of the text description, where the text classifier is constructed based on a sample text output by the text generation model and a sample label of the sample text.

In some optional implementations, the model selection module may be further configured to:
use a preset general model in the various text-to-image models as the target model in response to a failure in determining the style classification label.

In some optional implementations, the target image includes an advertisement image, where the text description is generated based on an advertisement theme and an object feature of an advertisement receiving object.

In some optional implementations, the image generation apparatus may include a multimedia data acquiring module.

The multimedia data acquiring module is configured to acquire multimedia data of a target object corresponding to the advertisement theme.

Accordingly, the image generation module may be configured to input the multimedia data and the text description into the target model to generate the target image through the target model.

The image generation apparatus provided by the embodiment of the present disclosure may execute the image generation method provided by any embodiment of the present disclosure, and has corresponding functional modules and beneficial effects for executing the method.

It is worth noting that the units and modules included in the above apparatus are only divided according to functional logic, which, however, is not limited to such division, as long as the corresponding functions may be implemented. In addition, the specific names of the functional units are only for the convenience of distinguishing from each other, and are not used to limit the protection scope of the embodiments of the present disclosure.

Reference is made to Fig. 6 below, which shows a schematic diagram of a structure of an electronic device (such as a terminal device or a server in Fig. 6) 600 suitable for implementing the embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in Fig. 6 is only an example, and should not impose any limitation on the function and scope of use of the embodiments of the present disclosure.

As shown in Fig. 6, the electronic device 600 may include a processing apparatus (such as a central processing unit and a graphics processor) 601, which may perform various appropriate actions and processing according to a program stored in a read-only memory (ROM) 602 or a program loaded into a random access memory (RAM) 603 from a storage 608. The RAM 603 further stores various programs and data required for operations of the electronic device 600. The processing apparatus 601, the ROM 602, and the RAM 603 are connected to each other through a bus 604. An input/output (I/O) interface 605 is also connected to the bus 604.

Usually, the following apparatuses may be connected to the I/O interface 605: an input apparatus 606 including, for example, a touch screen, a touchpad, a keyboard, a mouse, a camera, a microphone, an accelerometer, and a gyroscope; an output apparatus 607 including, for example, a liquid crystal display (LCD), a speaker, and a vibrator; a storage 608 including, for example, a magnetic tape and a hard disk; and a communication apparatus 609. The communication apparatus 609 may allow the electronic device 600 to perform wireless or wire communication with other devices to exchange data. Although Fig. 6 shows the electronic device 600 with various apparatuses, it should be understood that it is not required to implement or provide all of the apparatuses shown. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program includes program codes for performing the method shown in the flowchart. In such an embodiment, the computer program may be downloaded and installed from a network through the communication apparatus 609, or installed from the storage 608, or installed from the ROM 602. When the computer program is executed by the processing apparatus 601, the above-mentioned functions defined in the image generation method of the embodiments of the present disclosure are executed.

The electronic device provided by the embodiment of the present disclosure belongs to the same inventive concept as the image generation method provided by the above embodiment. For technical details not described in detail in the embodiment, reference may be made to the above embodiment, and the embodiment has the same beneficial effects as the above embodiment.

An embodiment of the present disclosure provides a computer storage medium having a computer program stored thereon, where the program, when executed by a processor, implements the image generation method provided by the above embodiment.

It should be noted that the above computer-readable medium in the present disclosure may be a computer-readable signal medium, a computer-readable storage medium, or any combination of the two. The computer-readable storage medium may be, for example, but is not limited to, an electrical, magnetic, optical, electromagnetic, infrared, or semiconductor system, apparatus, or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) or a flash memory (FLASH), an optical fiber, a portable compact disk read-only memory (CD-ROM), an optical storage device, a magnetic storage device, or any suitable combination of the above. In the present disclosure, the computer-readable storage medium may be any tangible medium that includes or stores a program, and the program may be used by or in combination with an instruction execution system, apparatus, or device. In the present disclosure, the computer-readable signal medium may include a data signal propagated on a baseband or as a part of a carrier wave, and computer-readable program codes are carried in the data signal. The data signal propagated in this manner may be in a plurality of forms, including but not limited to, an electromagnetic signal, an optical signal, or any suitable combination of the above. The computer-readable signal medium may also be any computer-readable medium other than the computer-readable storage medium, and the computer-readable signal medium may send, propagate, or transmit the program used by or in combination with the instruction execution system, apparatus, or device. The program codes contained on the computer-readable medium may be transmitted in any suitable medium, including but not limited to: a wire, an optical cable, a radio frequency (RF), etc., or any suitable combination of the above.

In some implementations, clients and servers may communicate using any currently known or future developed network protocol, such as the hyper text transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device, or it may exist alone without being assembled into the electronic device.

The above computer-readable medium carries one or more programs, and when the one or more programs are executed by the electronic device, the electronic device:

acquires a text description; determines a style classification label of the text description; determines, from various text-to-image models, a target model corresponding to the style classification label, where the various text-to-image models have different image generation styles; and generates, through the target model, a target image corresponding to the text description.

The computer program codes for performing the operations of the present disclosure may be written in one or more programming languages or a combination thereof, where the programming languages include but are not limited to object-oriented programming languages such as Java, Smalltalk, and C++, and further include conventional procedural programming languages such as "C" language or similar programming languages. The program codes may be executed entirely on a user computer, partly on the user computer, as a stand-alone software package, partly on the user computer and partly on a remote computer, or entirely on the remote computer or a server. In the case involving the remote computer, the remote computer may be connected to the user computer through any kind of network, including a local area network (LAN) or a wide area network (WAN), or it may be connected to an external computer (for example, connected via the Internet using an Internet service provider).

The flowcharts and block diagrams in the drawings illustrate the possibly implemented architectures, functions, and operations of the systems, methods and computer program products according to various embodiments of the present disclosure. In this regard, each block in the flowchart or block diagram may represent a module, program segment, or part of code, which includes one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The names of the units and modules do not constitute a limitation on the units and modules pe se under certain circumstances.

The functions described herein may be performed, at least in part, by one or more hardware logic components. For example, without limitation, exemplary types of hardware logic components that may be used include: a field programmable gate array (FPGA), an application specific integrated circuit (ASIC), an application specific standard parts (ASSP), a system on chip (SOC), a complex programmable logic device (CPLD), etc.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium may include: an electrical connection based on one or more wires, a portable computer magnetic disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

According to one or more embodiments of the present disclosure, an image generation method is provided, which comprises:
acquiring a text description;
determining a style classification label of the text description;
determining, from various text-to-image models, a target model corresponding to the style classification label, where the various text-to-image models have different image generation styles; and
generating, through the target model, a target image corresponding to the text description.

According to one or more embodiments of the present disclosure, an image generation method is provided, which further comprises:
in some optional implementations, acquiring the text description comprising:
acquiring a text generation theme and an object feature of an image receiving object; and
generating, through a text generation model, the text description based on the theme and the object feature.

According to one or more embodiments of the present disclosure, an image generation method is provided, which further comprises:
in some optional implementations, a process of constructing the text generation model comprising:
acquiring a sample object feature and a sample theme;
generating, through a pre-trained language model, a candidate text description based on the sample object feature and the sample theme;
processing the candidate text description based on a preset rule to obtain a target text description;
determining a text generation loss based on the target text description and the candidate text description; and
adjusting the pre-trained language model based on the text generation loss to obtain the text generation model.

According to one or more embodiments of the present disclosure, an image generation method is provided, which further comprises:
in some optional implementations, processing the candidate text description based on the preset rule includes at least one of the following:
filtering the candidate text description based on a preset filtering rule; and
adjusting the candidate text description based on a preset adjustment rule.

According to one or more embodiments of the present disclosure, an image generation method is provided, which further comprises:
in some optional implementations, determining the style classification label of the text description comprising:
determining, through a text classifier, the style classification label of the text description, where the text classifier is constructed based on a sample text output by the text generation model and a sample label of the sample text.

According to one or more embodiments of the present disclosure, an image generation method is provided, which further comprises:
in some optional implementations, using a preset general model in the various text-to-image models as the target model in response to a failure in determining the style classification label.

According to one or more embodiments of the present disclosure, an image generation method is provided, which further comprises:
in some optional implementations, the target image including an advertisement image, where the text description is generated based on an advertisement theme and an object feature of an advertisement receiving object.

According to one or more embodiments of the present disclosure, an image generation method is provided, which further comprises:
in some optional implementations, acquiring multimedia data of a target object corresponding to the advertisement theme; and
accordingly, generating, through the target model, the target image corresponding to the text description comprising:
   inputting the multimedia data and the text description into the target model to generate the target image through the target model.

According to one or more embodiments of the present disclosure, an image generation apparatus is provided, which comprises:
a text acquiring module, configured to acquire a text description;
a label determination module, configured to determine a style classification label of the text description;
a model selection module, configured to determine, from various text-to-image models, a target model corresponding to the style classification label, where the various text-to-image models have different image generation styles; and
an image generation module, configured to generate, through the target model, a target image corresponding to the text description.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above inventive concept. For example, the above features and the technical features provided in the present disclosure (but not limited to) with similar functions may be replaced each other to form a technical solution.

In addition, although the various operations are depicted in a specific order, this should not be understood as requiring the operations to be performed in the specific order shown or in a sequential order. Under certain circumstances, multitasking and parallel processing may be advantageous. Similarly, although the above discussion contains a number of specific implementation details, these should not be construed as limiting the scope of the present disclosure. Certain features that are described in the context of separate embodiments may also be implemented in combination in a single embodiment. Conversely, various features described in the context of a single embodiment may also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. An image generation method, comprising:
acquiring a text description;
determining a style classification label of the text description;
determining, from various text-to-image models, a target model corresponding to the style classification label, wherein the various text-to-image models have different image generation styles; and
generating, through the target model, a target image corresponding to the text description.

2. The method of claim 1, wherein the acquiring the text description comprises:
acquiring a theme of text generation and an object feature of an image receiving object; and
generating, through a text generation model and based on the theme and the object feature, the text description.

3. The method of claim 2, wherein a process of constructing the text generation model comprises:
acquiring a sample object feature and a sample theme;
generating, through a pre-trained language model and based on the sample object feature and the sample theme, a candidate text description;
obtaining a target text description by processing the candidate text description based on a preset rule;
determining, based on the target text description and the candidate text description, a text generation loss; and
obtaining, based on the text generation loss, the text generation model by adjusting the pre-trained language model.

4. The method of claim 3, wherein the processing the candidate text description based on the preset rule comprises at least one of:
filtering, based on a preset filtering rule, the candidate text description; and
adjusting, based on a preset adjustment rule, the candidate text description.

5. The method of claim 2, wherein the determining the style classification label of the text description comprises:
determining, through a text classifier, the style classification label of the text description, wherein the text classifier is constructed based on a sample text output by the text generation model and a sample label of the sample text.

6. The method of claim 1, further comprising:
using a preset general model in the various text-to-image models as the target model in response to a failure in determining the style classification label.

7. The method of any of claims 1 to 6, wherein the target image comprises an advertisement image, wherein the text description is generated based on an advertisement theme and an object feature of an advertisement receiving object.

8. The method of claim 7, further comprising:
acquiring multimedia data of a target object corresponding to the advertisement theme; and
accordingly, the generating, through the target model, the target image corresponding to the text description comprising:
generating, through the target model, the target image by inputting the multimedia data and the text description into the target model.

9. An image generation apparatus, comprising:
a text acquiring module, configured to acquire a text description;
a label determining module, configured to determine a style classification label of the text description;
a model selecting module, configured to determine, from various text-to-image models, a target model corresponding to the style classification label, wherein the various text-to-image models have different image generation styles; and
an image generating module, configured to generate, through the target model, a target image corresponding to the text description.

10. An electronic device, comprising:
one or more processors; and
a storage, configured to store one or more programs,
wherein the one or more programs, when executed by the one or more processors, cause the one or more processors to implement the image generation method of any of claims 1 to 8.

11. A storage medium comprising computer-executable instructions, wherein the computer-executable instructions, when executed by a computer processor, are configured to perform the image generation method of any of claims 1 to 8.
